# EUROPEAN PATENT SPECIFICATION

(11) **EP 4 169 811 B1**
(45) Date of publication and mention of the grant of the patent: **03.04.2024**
(21) Application number: 21207959.4
(22) Date of filing: 12.11.2021
(51) Int. Cl.: B62D 21/20, F16B 2/10, F16B 2/12, F16B 5/06, F16B 7/04, B62D 27/06, B62D 59/04

(54) **ATTACHMENT DEVICE, SYSTEM AND VEHICLE WITH SUCH AN ATTACHMENT DEVICE**
BEFESTIGUNGSVORRICHTUNG, SYSTEM UND FAHRZEUG MIT EINER SOLCHEN BEFESTIGUNGSVORRICHTUNG
DISPOSITIF DE FIXATION, SYSTÈME ET VÉHICULE ÉQUIPÉS D'UN TEL DISPOSITIF DE FIXATION

(30) Priority: 20.10.2021 CN 202111219514
(43) Date of publication of application: 26.04.2023
(73) Proprietor: Carman Enterprise Co., Ltd., Hangzhou 311121 (CN)
(72) Inventor: Li, Xianwei, Hangzhou, Zhejiang, 310000 (CN)
(74) Representative: Paul & Albrecht Patentanwälte PartG mbB

(56) References cited:
- EP-A1- 2 551 173
- EP-A1- 3 789 620
- EP-B1- 3 543 088

## Description

The present invention relates to an attachment device for attaching a cross member of a maneuvering drive system to a vehicle, in particular to the chassis of a vehicle comprising a basic element that defines a reception space for a section of a cross member, wherein the reception space extends in the longitudinal direction of the basic element and is open at its opposite ends, a lever element, which extends above the basic element and is pivotably attached thereto by means of a pivot bearing assembly defining a pivot axis, and at least one clamping device by means of which a free front end portion of the lever element can be pivoted around the pivot axis towards the basic element in order to clamp a component of a vehicle, in particular the chassis of the vehicle, between the free front end portion of the lever element on the one hand and the basic element and/or a cross member that extends through the reception space of the basic element on the other hand.

Moreover, the invention relates to a maneuvering drive system having such an attachment device.

What is already known from the state of the art are so-called auxiliary or maneuvering drive systems by means of which vehicles without their own drive, such as camping, boat or horse trailers, can for example be moved or maneuvered comfortably even if they are not connected to a towing vehicle.

Such a system usually comprises at least two maneuvering drive units via which two wheels of a vehicle to be maneuvered can be set into rotation. The maneuvering drive units are mounted at the outer side of the vehicle, usually in an area directly in front of or behind the wheels that are to be driven by means of the units. The maneuvering drive units respectively comprise a drive element that is motor-rotated and brought into a frictionally engaged contact with a wheel of the vehicle, so that a rotation of the drive element causes a rotation of the corresponding wheel of the vehicle. A system with two such maneuvering drive units is for example explained in DE 20 2014 103 988 U1, as well as DE 20 2016 105 321 U1 that have also been filed by the applicant.

In order to attach the maneuvering drive units in a reliable manner, it has proven to be advantageous to affix a continuous cross member carrying two maneuvering drive units at the chassis, that is, the chassis of a vehicle to be driven. This kind of attachment can be seen in Figure 1 of DE 20 2016 105 321 U1, for example. Specifically, the cross member is affixed at both sides of the vehicle respectively at a side beam of the vehicle frame, wherein clamping elements with U-shaped clamps are used for this purpose, surrounding the respective side beam at the outer side.

A particularly reliable and safe as well as robust attachment of the maneuvering drive system is of great importance. On the one hand, the roller-type drive elements must be reliably held in contact with the respective wheel during a maneuvering process. On the other hand, it is important that a reliable affixing is ensured at all times, for example also during longer drives when the vehicle is towed by a towing vehicle and the maneuvering drive system is not needed, since a component falling off would entail a very high risk of an accident occurring. At the same time, it is desirable that a vehicle can be provided with a maneuvering drive system in a particularly comfortable manner, which requires for the mounting to be as easy as possible.

What is described in a EP 2 551 073 A1 is an attachment device that represents an alternative to the clamping elements with U-shaped clamps as they are known from DE 20 2016 105 321 U1. It comprises a basic element that is formed as a U-shaped profile part defining a longitudinally extending elongated reception space for a longitudinal section of a cross member to be attached, with a lever element being supported at its open top side so as to be pivotable about a pivot axis. A pressure element is provided at the one end area of the lever element, and a clamping device is provided at the other facing end area, with the clamping device being embodied to create a force between the associated end of the lever element and a section of a cross member that is arranged inside the basic element. At that, the arrangement is realized in such a manner that, in the event of a force being applied, the respective end is moved away from the basic element, while the facing other end at which the pressure element is positioned is simultaneously moved towards the basic element. For this purpose, the pivot axis is located approximately centrally between the end with the pressure element and the end with the clamping device, so that the lever element forms a kind of rocker. If the clamping device is actuated and the end area of the lever element with the pressure element is moved in the direction of the basic element, a section of a component of the vehicle, in particular of a support of a chassis, that is located between the pressure element and the basic element can be clamped in between the lever element and the basic element, and the cross member, of which a longitudinal section extends through the reception space in the basic element, is thus affixed in a clamping manner. To reliably affix a cross member at a vehicle, two of these attachment devices of this type are used, by means of which respectively one end area of a cross member is fixated in a clamping manner at the two facing side members of a chassis.

In principle, the attachment devices as they are known from EP 2 551 073 A1 have proven to be useful. However, there still remains a need for alternatively embodied attachment devices that facilitate a particularly reliable affixing of a cross member at a vehicle, while at the same time being comfortable and easy to mount.

In order to overcome that problem, EP 3 543 088 B1 suggests an attachment device, wherein the clamping device is positioned to create a clamping force, that acts on the lever element between the pivot bearing and the free end of the lever element.

These attachment devices have proven excellent. However, there is the tendency to provide attachment devices that are even more flexible to use.

In view of this, it is an object of the present invention provide an attachment device of the initially mentioned kind, which is more flexible to use.

According to the present invention this object is solved by an attachment device of the initially mentioned kind which is characterized in that the lever element is mounted to the basic element in a height adjustable manner. Preferably, the lever element is attached to the basic element in a height adjustable manner at its rear end portion.

Since according to the present invention, the lever element can be attached to the basic element in different heights, the range, in which the attachment device can be opened at its free end, is very wide with the consequence, that structures from very small to very big can be clamped between the basic element and the lever element.

A preferred embodiment of the attachment device according to the present invention is characterized in that the pivot bearing assembly comprises a pivot shaft or pivot pins defining the pivot axis and provided on the basic element, and bearing slots that are provided in the lever element and are open to the rear or front, so that the engagement slots on the one hand and the pivot pins or the bearing shaft on the other hand can be brought into engagement by a sliding movement, wherein several bearing slots are provided one above the other in the lever element, so that the lever element can be mounted to the basic element in a height adjustable manner, wherein, in particular, the bearing slots slope downwardly towards their open ends. In this embodiment the lever element can be positioned on the basic element in a desired height by simply sliding the corresponding bearing slot(s) of the lever element into engagement with the pivot pins or the bearing shaft provided on the basic element.

According to a further embodiment of the invention the basic element and the lever element have a U-shaped profile, wherein the U-legs of the basic element and the lever element overlap each other and the pivot bearing assembly is provided in the overlapping regions of the U-legs. In this case corresponding pairs of bearing slots may be provided one above the other in the U-legs of the lever element and the bearing shaft or the pair of pivot pins may be provided on the U-legs of the basic element.

Preferably, the clamping device is connected to the basic element and lever element between the free front end portion of the lever element and the pivot bearing.

Clamping devices may be provided on both lateral sides of the basic element, so that they are easily accessible to be actuated by a user.

A preferable design of the attachment device according to the invention is characterized in that each clamping device is formed as a screw connection comprising a threaded clamping element, in particular a screw or a threaded bolt, which extends through corresponding through holes in the basic element and the lever element and has at least one screw nut fixed thereon. In this embodiment the clamping device can be actuated in that the threaded clamping elements, for example a threaded bolt or screw and/or screw nuts fixed thereon, are actuated. In this case the heads of the threaded elements the screw nuts are easily accessible from the bottom side or top side of the chassis, where is enough available space. A user can for example comfortably actuate the threaded elements and/or the screw nuts by using an electrically driven screw driver and in this way the cross member and a structure of the vehicle chassis between the basic element and the lever element in an central manner. The through holes need not necessarily have a round section, but they may also have a lengthy form, so that there is enough space, in which the threading clamping elements may move, when the lever element is rotated around the pivot axis relative to the basic element.

Further, is can be provided that the basic element and the lever element respectively have lateral projections on their lateral sides, wherein the through bores are provided. In this way, the clamping devices are even more easy to access.

Moreover, the basic element and/or the lever element can be made of punshed steel sheet, that may in particular have perforations therein in order to make the basic element and the lever element lightweight.

A further embodiment of the attachment device according to the present invention is characterized in that a pressure element is arranged at the free end of the lever element and has at its bottom side a pressure face to be brought into contact with a component of a vehicle, wherein the pressure face has a wave-shaped profile.

The pressure element facilitates a particularly safe clamping effect and may at the same time serve for protecting the component of a vehicle at which the attachment device is attached, for example a stringer of a vehicle frame.

The pressure element preferably consists of a material or comprises such a material that is characterized by a hardness of less than 140 HB. For example, the pressure element may consist partially or completely of an aluminum alloy or steel.

At its bottom side that is to be brought into contact with a component of a vehicle, in particular the chassis of a vehicle, the pressure element preferably has a wave-shaped profile that increases the friction, and therefore the grip. Alternatively or additionally, it can have a coating of rubber and/or plastic material at the bottom side.

For a particularly reliable positioning, the lever element can further comprise at least one downwardly protruding, in particular U-shaped or V-shaped, projection, and the pressure element can have at least one correspondingly shaped and arranged indentation into which in particular the U-shaped or V-shaped projection of the lever element meshes in the mounted state. Preferably, the lever element comprises at least two downwardly protruding, in particular U-shaped or V-shaped, projections, and the pressure element preferably has at least two correspondingly shaped and arranged indentations into which the projections mesh in the mounted state. Through the indentation(s) and corresponding projection(s), a firm pressing together can also be obtained in the event that a variation in thickness is present in that component at which the attachment device is clamped in, such as for example a chassis.

Finally the attachment device may have positioning means that are provided on the upper face of the basic element for a positioning a height adjustment element or a stack of height adjustment elements on the upper side of the basic element.

A further subject matter of the invention is a maneuvering drive system comprising a cross member, a maneuvering drive unit attached or to be attached to the cross member and at least one attachment device according to the invention, wherein the cross member has a rectangular, in particular a square profile and the cross member and the reception space of the basic element are dimensioned in such a manner, that the cross member can be arranged in the reception space to extend therethrough.

The maneuvering drive system preferably comprises at least one height adjustment element to be positioned on the upper side of the basic element at the front end thereof, wherein the height adjustment element has a width, which exceeds the width of the basic element in the transverse direction thereof.

In particular several height adjustment elements are provided, all of which have the same design and are provided with fixing means for attaching the height adjustment elements to each other and one above the other.

In this case the fixing means may include grooves in the upper face of each height adjustment element and corresponding tongues provided at the bottom side of the height adjustment element, wherein the tongues of one height adjustment element can be slidingly brought into engagement with the grooves of a different height adjustment element, wherein the grooves and tongues, in particularly extend in a front to rear direction.

According to this embodiment a height adjustment element or a stack of height adjustment elements may be positioned on the upper side of the basic element if necessary. In this way the height adjustability of the lever element is particularly advantageous. If the several height adjustment elements, which are stacked one above the other, are attached to each other they build a solid block. Since the height adjustment elements preferably all have the same design, they are universally useable.

Preferably, the upper side of each height adjustment element is provided with a structure, in particular provided with a wavy structure to increase the friction between the height adjustment element and a component in contact therewith.

Finally, the height adjustment element or each height adjustment element is provided with fixing means for attaching a stop element to the front side of the height adjustment element at a lateral end thereof.

Preferably, the stop element is provided on the upper most height adjustment element of a stack and extends upwardly or laterally therefrom, so that it collides with a component of the attachment device, in particular the pressure element, when the stack unintentionally is moved rearwardly.

Exemplary embodiments of the present invention will be described in the following making reference to the attached drawing. In the drawing
- Figure 1: shows a perspective top view of a maneuvering drive system according to the present invention, which is attached to the chassis of a vehicle to be driven;

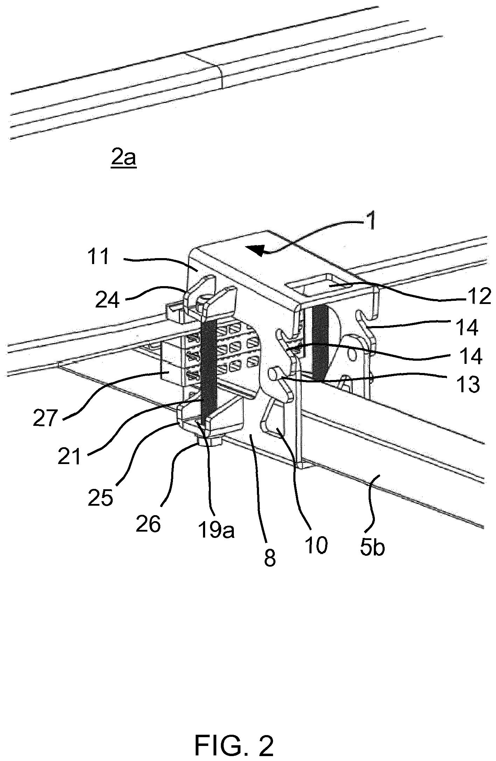

- Figure 2: shows an enlarged perspective view of a mounting site, where a cross member of the maneuvering drive system is attached to the chassis of a vehicle to be driven;
- Figure 3: shows the attachment device of the maneuvering drive system in a perspective front view;
- Figures 4 to 6: show the attachment device of figure 3, wherein the lever element is attached to the basic element in different heights and height adjustment blocks are provided;
- Figures 7 to 10: show the attachment devices of figure 3 to 6 in a schematic side view mounted to the side element of a vehicle chassis;

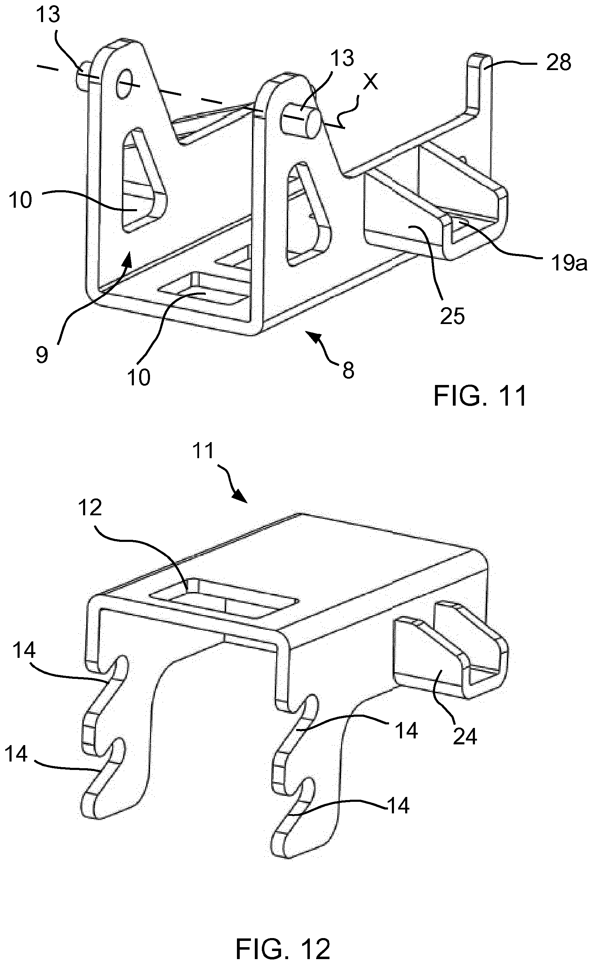

- Figure 11: shows the basic element of the attachment device of figure 3 in a perspective rear view;
- Figure 12: shows the lever element of the attachment device of figure 3 in a perspective rear view;

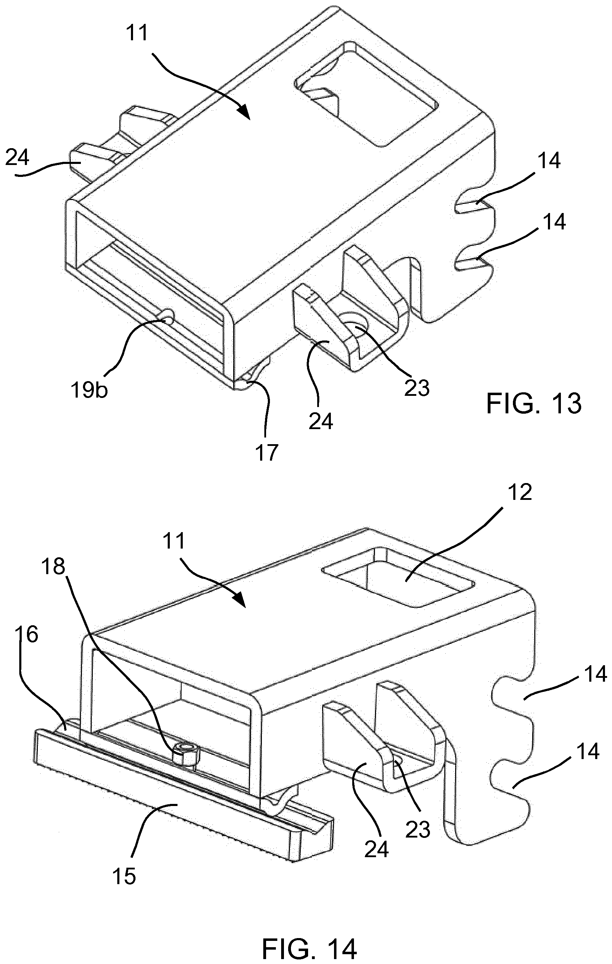

- Figure 13: shows the lever element of figure 12 in a perspective front top view;
- Figure 14: shows the lever element of figure 12 in a perspective front/side view;

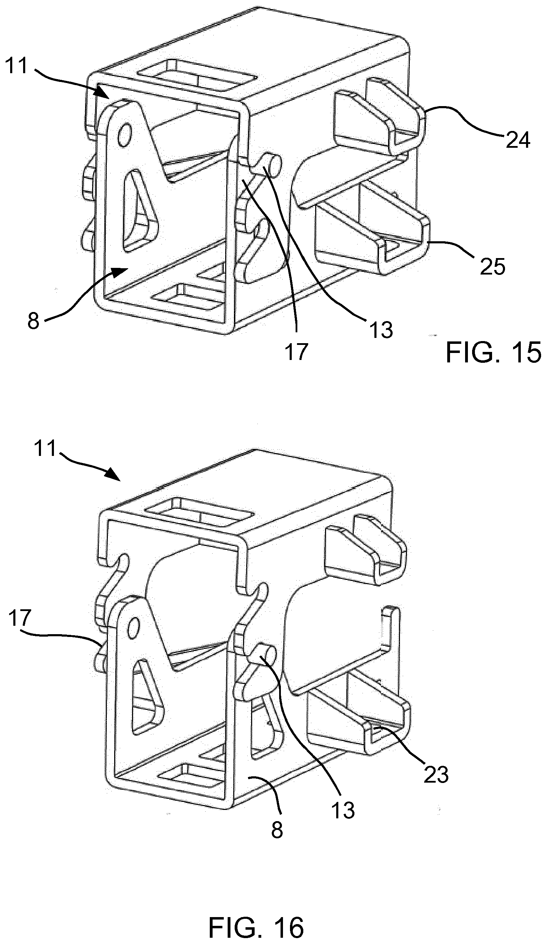

- Figure 15: shows the basic element of figure 11 and the lever element of figure 12 attached to each other in a first height position;
- Figure 16: shows the basic element and the lever element attached to each other in a second height position;
- Figure 17: shows a pressure element of the attachment device of figure 3 in a perspective view;
- Figure 18: shows the pressure element of figure 17 in a side view;
- Figure 19: shows the pressure element of figure 17 in a front view;
- Figure 20: shows the pressure element of figure 17 in a perspective front/bottom view;
- Figure 21: shows the basic element of a second exemplary embodiment of an attachment device according to the invention obliquely from above.

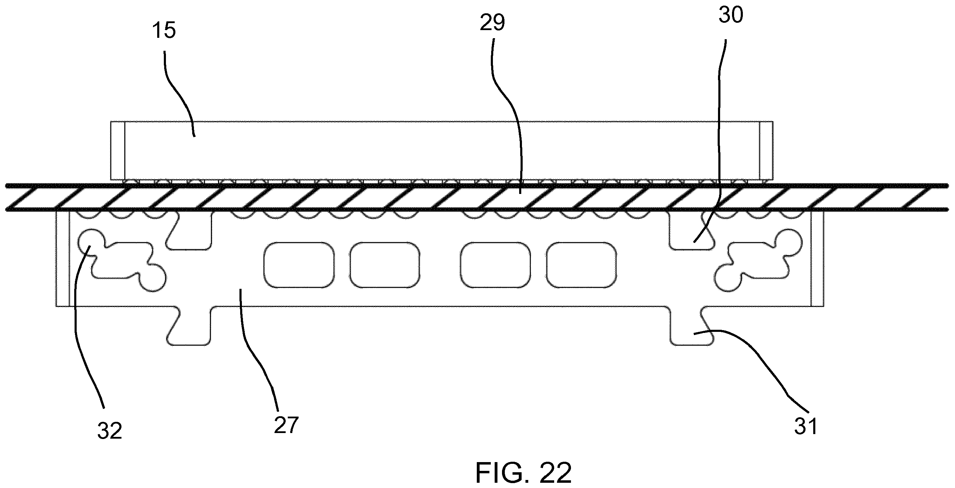

- Figure 22: is a front view showing a structure of the chassis clamped between the pressure element of figure 17 and height adjustment element;

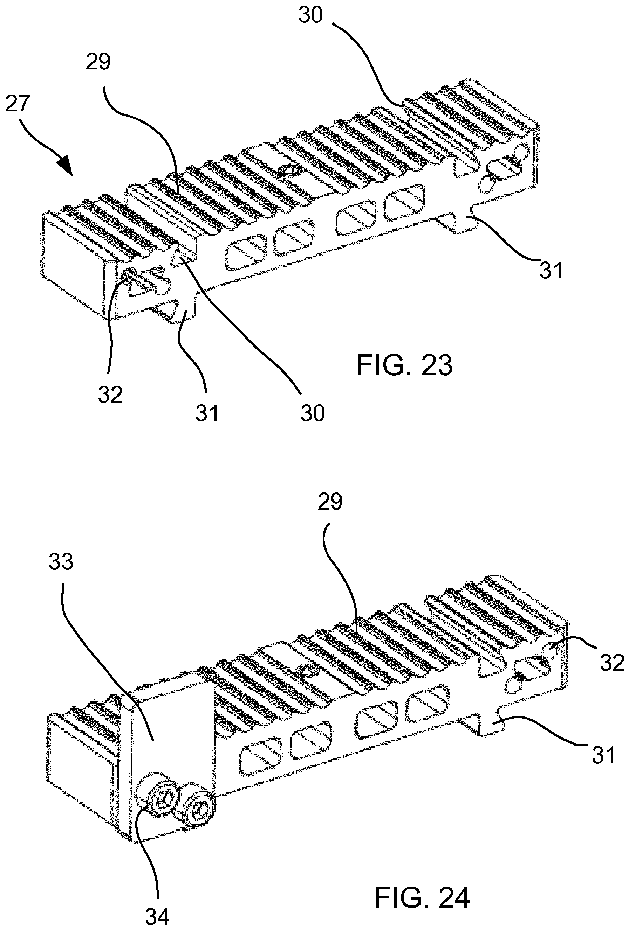

- Figure 23: shows a height adjustment element according to the present invention in a perspective front/top view;
- Figure 24: shows the height adjustment element of figure 23 having a stop element attached thereto;

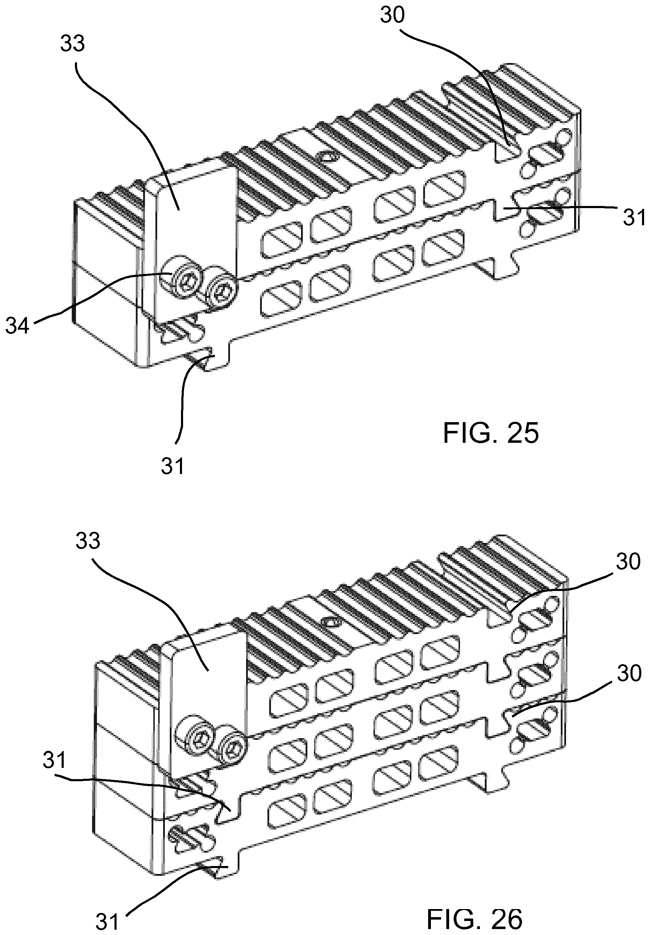

- Figure 25: shows the height adjustment elements of figures 23 and 24 attached to each other and positioned one above the other; and
- Figure 26: shows an arrangement of two height adjustment blocks according to figure 23 and the height adjustment block of figure 24 attached to each other and positioned above each other.

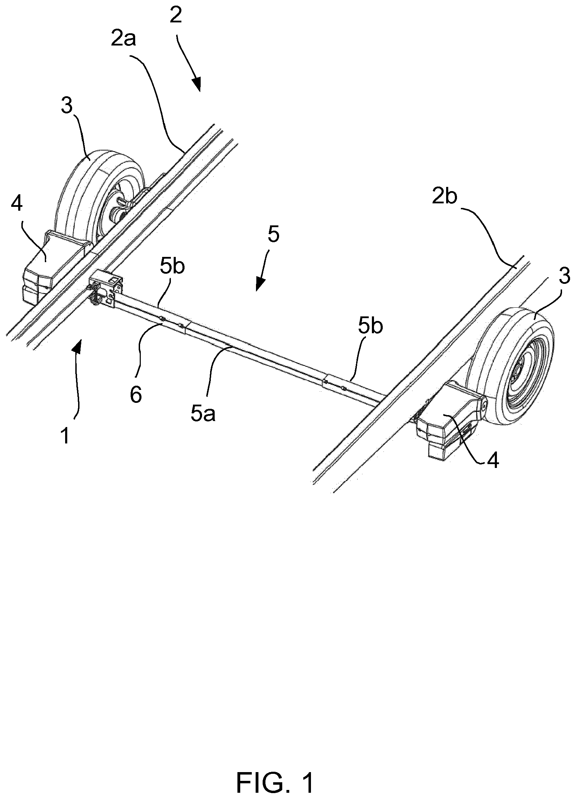

Figure 1 shows an exemplary embodiment of a maneuvering drive system 4 according to the present invention, which is attached to the chassis 2 of a vehicle, here a trailer or caravan to be towed by a car. Figure 1 only shows two side members 2a, 2b of the chassis 2 and two wheels 3 of the trailer.

The maneuvering drive system 4 comprises two maneuvering drive units 4, that are each associated to one of the wheels 3 and have drive rolls, that can be brought into engagement with the wheels 3 in order to move the trailer, even if the trailer is not connected to a towing vehicle. The maneuvering drive system 4 further comprises a cross member 5 with a square profile, that consists of a central bar 5a having a square cross section and two end tubes 5b, which also have a square cross section and are plugged on the axial ends of the central bar 5a and fixed thereto by means of screws 7. The end tubes 5b of the cross member 5 each carry one maneuvering drive unit 4.

For fixing the maneuvering drive system 4 to the chassis 2 two attachment devices 1 are provided, by means of which the cross member 5 is attached to the side members 2a, 2b of the chassis 2 in a clamping manner.

Each attachment device 1 comprises a basic element 8, which has a U-shaped cross section and is made from a punshed sheet steel. The basic element 8 defines a reception space 9 which extends in a longitudinal direction of the basic element 8 and is open at its opposite ends, so that the cross member 5 can extend therethrough. The dimensions of the U-shaped basic element 8 are chosen in such a manner, that it surrounds the square tube 5b of the cross member 5 in a form-fitting manner with play at three sides. The basic element 8 has various perforations 10, so that it has a comparatively low weight at the same a comparatively high stability.

The attachment device 1 further comprises a lever element 11, which also has a U-shaped profile and is made of a punshed steel sheet, which has perforations 10 at its top side. This is readily obtainable from the drawing, that the U-legs of the basic element 8 on the one hand and the lever element 11 on the other hand overlap each other at a rear part of the attachment device 1 . To achieve this, the lever element 11 is broader than the basic element 8 in this rear part of the attachment device 1.

The lever element 11 extends above the basic element 8 and is pivotably attached thereto by means of a pivot bearing assembly. This pivot bearing assembly comprises two pivot pins 13, which extend laterally outwardly from the U-legs of the basic element 8 and define the pivot axis X, and corresponding bearing slots 14 in the U-legs of the lever element 11, which are open to the rear side of the lever element 11 and slope downwardly towards the open ends. According to the present invention two pairs of bearing slots 14 are provided in the U-legs of the lever element 11 one above the other. In this way the lever element 11 can be pivotably attached in different heights on the basic element 8, with a pivot axis X remaining the same.

At the free end of the lever element 11, an elongated pressure element 15 is provided, which extends transversely to the basic element 8 and is fixed to the lever element 11 by means of a screw 7 at the lower side thereof.

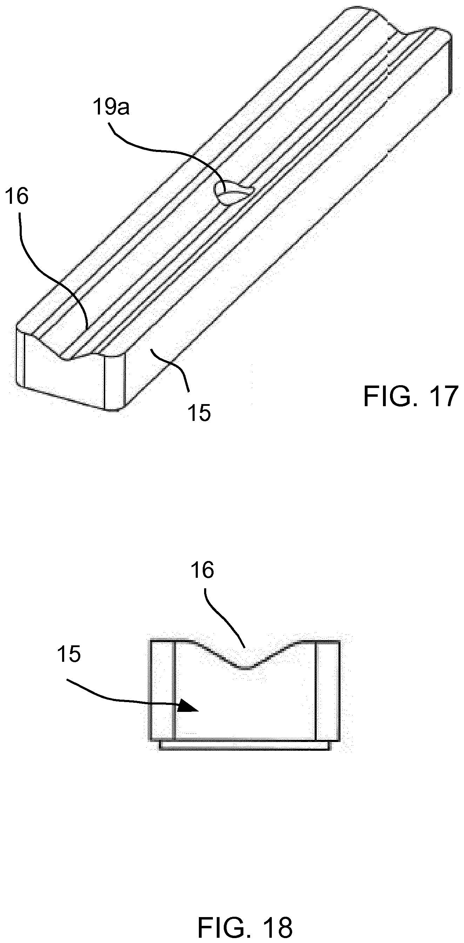

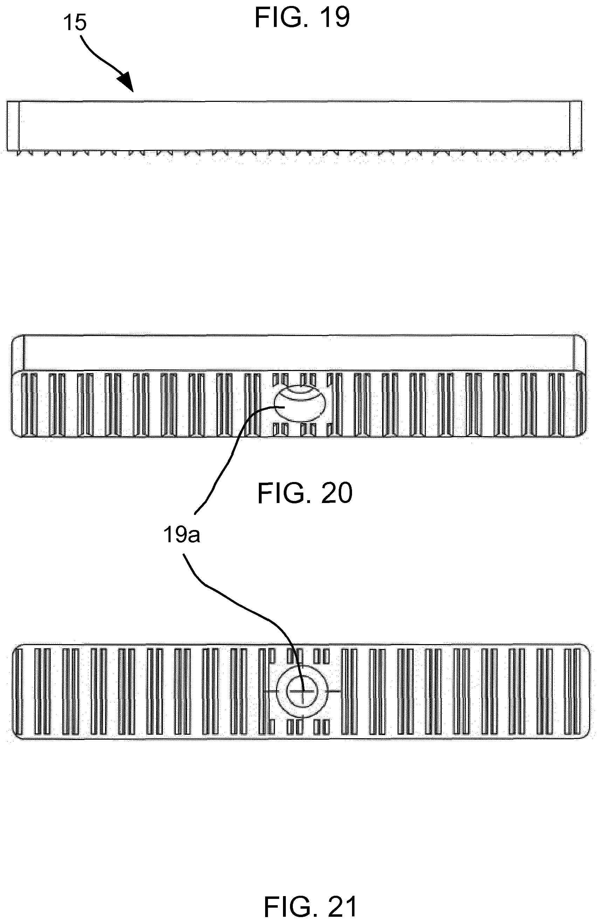

The pressure element 15, which is separately shown in Figures 17 to 21 in different enlarged views, may be made of sheet steel like the basic element 8 and the lever element 11, but here consists of an aluminum alloy that is characterized by a hardness of less than 140 HB. This hardness is lower than that of the chassis 2, which is made of steel and has a hardness of 160 HB, so that the pressure element 15 protects the chassis 2 particularly effectively. At its bottom side, the pressure element 15 has a wave-shaped profile (cf. in particular Figure 21). In this manner, a particularly high friction and thus a particularly reliable affixing is obtained under pressure.

At its top side, the pressure element 15 further has a recess 16 (cf. Figure 21) that corresponds to a projection 17 at the bottom side of the lever element 11. When the pressure element 15 is fixed to the lever element 11, the projection 17 engages with the recess 16, whereby a particularly secure positioning of the pressure element 15 is ensured, which also contributes to a reliable attachment of the cross member 5 at the vehicle chassis 2. Tanks to the recess 16 and corresponding projection 17, a firm pressing together can further be achieved even in the case that the chassis 2 has variations in thickness.

In the present case, the pressure element 15 is fixed to the lever element 11 by means of a screw 7, which extends through corresponding bores 19a, 19b in the pressure element 15 and the lever element 11.

In order to fix the two attachment devices 1 and the cross member 5 to the vehicle chassis 2 in a clamping manner, each of the two attachment devices 1 has two clamping devices 20 by means of which the free front end portion of the lever element 11 at which the pressure element 15 is attached can be moved in the direction of the basic element 8 so as to clamp in a section of the respective side member 2a, 2b of the chassis 2 between the pressure element 15 and the cross member 5 received in the bar reception space 9 of the basic element 8.The clamping devices 20 are formed and arranged in such a manner that the clamping forces act on the lever element 11 near the front free end region thereof, whereby a particularly reliable affixing is achieved.

Each of the two clamping devices 20, which are arranged of the opposite lateral sides of the basic element 8, comprises a screw 21 that extends through a through bore 22 in the lever element 11 and a through bore 23 in the basic element 8 that is aligned with the same. Specifically, the through bores 22, 23 are provided in projections 24, 25 that extend from the side faces of the basic element 8 and the lever element 11. Here, the projections are dimensioned in such a manner that the heads 21a of the screws 21 positioned inside the projections 24, 25 in a torque-proof manner. A screw nut 26 serving as an actuating element of the respective clamping device 20 is screwed onto each of the two screws 21. A washer is provided between the respective screw nut 26 and the projection 24 in a per se known manner.

In order to fix a cross member 5 at the chassis 2 of a vehicle, respectively one attachment device 1 is slid onto an end of the cross member 5, and the attachment devices 1 are positioned with the cross member 5 held therein at a side member 2a, 2b of the vehicle chassis 2, so that a bottom area of the side member 2a, 2b is located between the bottom side of the pressure element 15 and the top side of the cross member 5. The basic element 8 and the cross member 5 are dimensioned in such a manner that the cross member 5 protrudes upwards and above the basic element 8 by approximately 1 mm, so that the bottom side of the side member 2a, 2b is in contact with the top side of the cross member 5 in this position.

Then, the clamping devices 20 are actuated by turning the screw nuts 26 onto the screws 6, 18, 21, thereby pivoting the free end portion of the lever element 11 towards the basic element 8, until it comes into contact with the upper side of the side bar 2a of the chassis 2 and the attachment device 1 with the cross member 5 held therein is securely clamped to the side bar 2a.

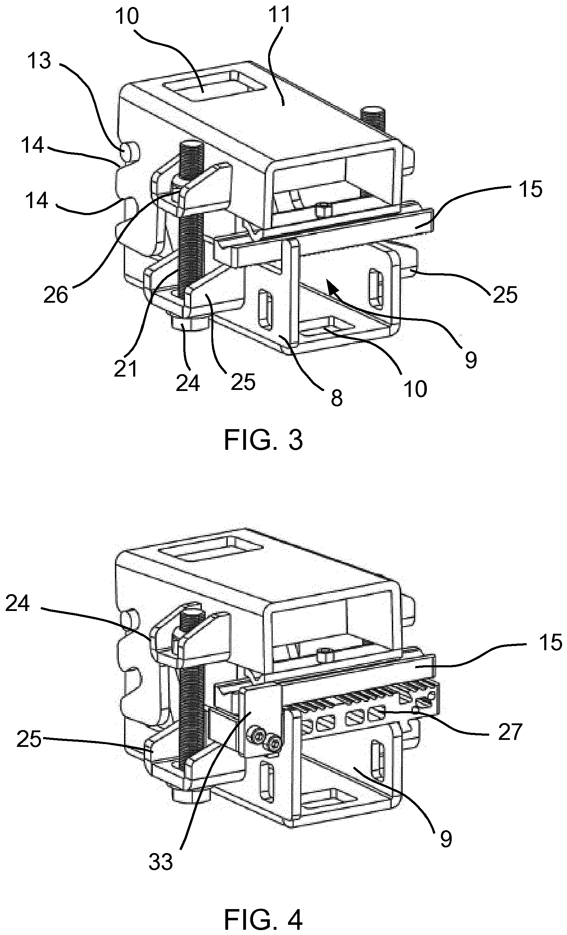

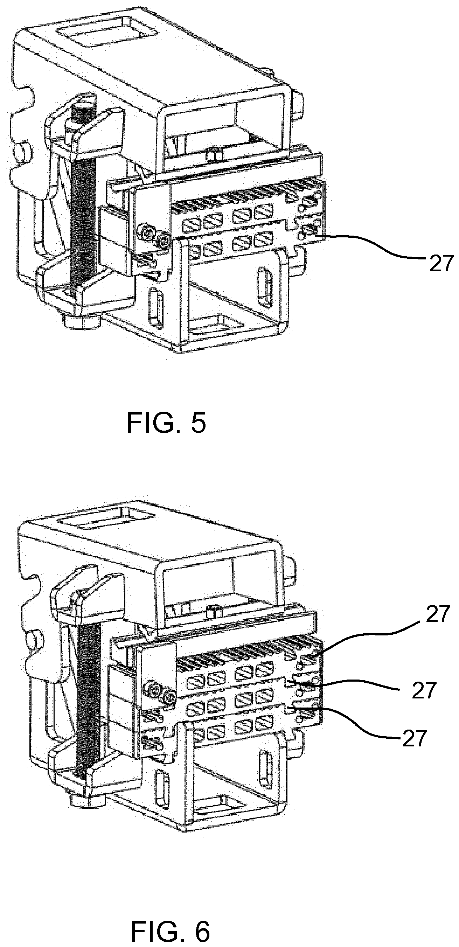

According to the present invention, height adjustment elements 27 may be positioned on the upper side of the basic element 8 at the front end thereof, as it is shown in figures 4 to 6. Specifically, height adjustment elements 27 are provided, which all have the same configuration and can be stacked one above the other and are connected to each other. Each height adjustment element 27 is formed as an elongated block, which has a width, which is broader than the width of the basic element 8, so that the height adjustment elements protrude laterally to both sides of the basic element 8 when positioned thereon. In order to avoid, that the height adjustment 27 elements can move unintentionally to the front, positioning means in the form of an upride strut 28 are provided at the front end of the basic element 8.

The upper side of the height adjustment element 27 is provided with a structure, here a wave structure to improve the friction properties. Moreover, the height adjustment element 27 has grooves in its upper surface and corresponding tongues 31 at its under side, which are formed in such a way, that the tongues of one height adjustment element 27 can be inserted into the grooves 30 in the upper side of another height adjustment element 27 in order to connect the height adjustment elements 27. The grooves 30 and tongues 31 extend in a front to rear direction.

Moreover, fixing means of form of threaded bores 32 are provided in the front side of the height adjustment element 27, so that a stop element in the form of a stop plate 33 can be attached to the height adjustment element 27. The stop plate 33 is configured such that it comes into abutment with the pressure element 15 provided on the lever element 11 in order to prevent the height adjustment element or a stack of height adjustment elements 29 from moving rearwardly. In other words, the height adjustment elements 27 are positioned between the upride strut 28 of the basic element 8 and the engagement of the stop plate 33 fixed to the height adjustment element 27 and the pressure element 15.

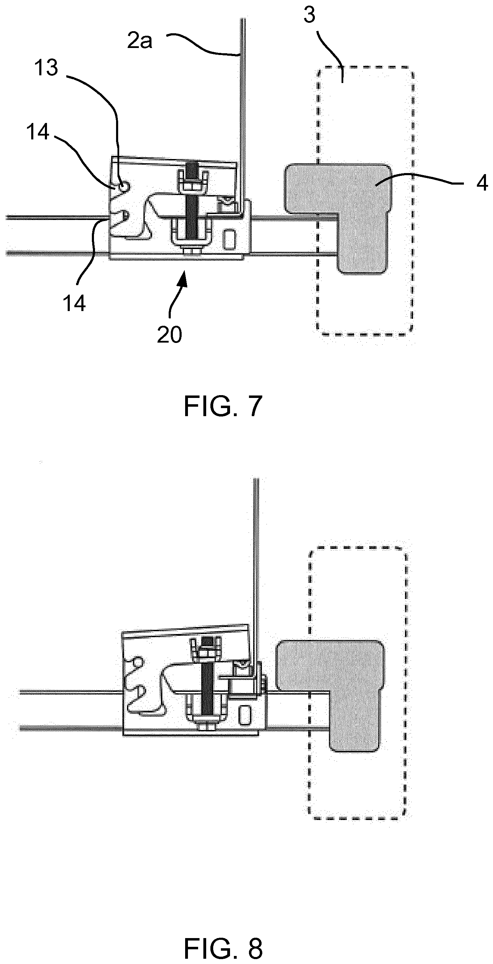

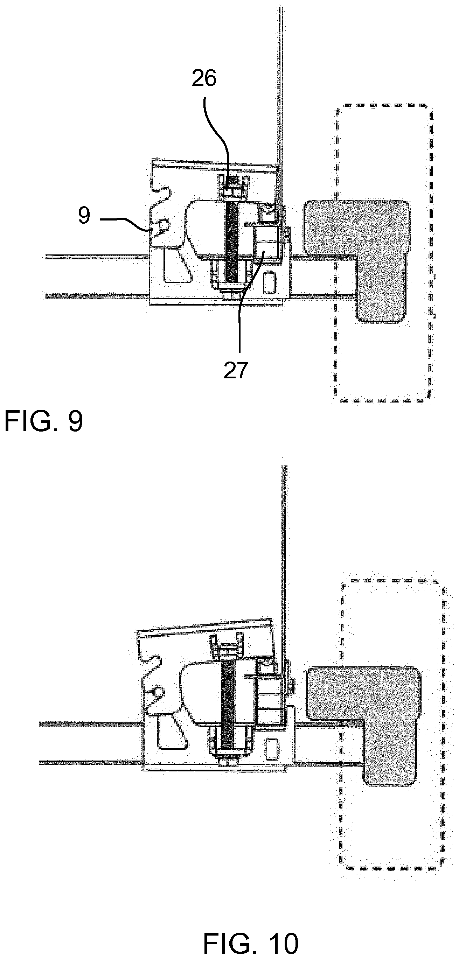

The provision of a height adjustable lever element 11 and height adjustment elements 27 allows a very flexible usage of the attachment device 1 according to the invention. Some possible mounting arrangements are shown in figures 7 to 10 of the drawing.

### Bezugszeichenliste

- 1: attachment device
- 2: chassis
- 2a: side member
- 2b: side member
- 3: wheels
- 4: maneuvering drive units
- 5: cross member
- 5a: central bar
- 5b: end tube
- 6: screw
- 7: screw
- 8: basic element
- 9: reception space
- 10: perforation
- 11: lever element
- 12: perforation
- 13: pivot pins
- 14: bearing slots
- 15: pressure element
- 16: recess
- 17: projection
- 18: screw
- 19a: bore
- 19b: bore
- 20: clamping device
- 21: screw
- 22: through bore
- 23: bore
- 24: projection
- 25: projection
- 26: screw nut
- 27: height adjustment element
- 28: upright strut
- 29: wave structure
- 30: grooves
- 31: tongues
- 32: threaded bores
- 33: stop plate
- 34: screws
- X: pivot axis

## Claims

1. Attachment device (1) for attaching a cross member (5) of a maneuvering drive system to a vehicle (4), in particular to the chassis (2) of a vehicle (4), comprising
- a basic element (8) that defines a reception space (9) for a section of a cross member (5), wherein the reception space (9) extends in the longitudinal direction of the basic element (8) and is open at its opposite ends,
- a lever element (11), which extends above the basic element (8) and is pivotably attached thereto by means of a pivot bearing assembly defining a pivot axis (X), and
- at least one clamping device (20) by means of which a free front end portion of the lever element (11) can be pivoted around the pivot axis (X) towards the basic element (8) in order to clamp a component of a vehicle (4), in particular the chassis (2) of the vehicle (4), between the free front end portion of the lever element (11) on the one hand and the basic element (8) and/or a cross member (5) that extends through the reception space (9) of the basic element (8) on the other hand, **characterized in that** the lever element (11) is mounted to the basic element (8) in a height adjustable manner.

2. Attachment device (1) according to claim 1, **characterized in that** the lever element (11) is attached to the basic element (8) in a height adjustable manner at its rear end portion.

3. Attachment device (1) according to claim 1 or 2, **characterized in that** the pivot bearing assembly comprises a pivot shaft or pivot pins (13) defining the pivot axis (X) and provided on the basic element (8), and bearing slots (14) that are provided in the lever element (11) and are open to the rear or front, so that the engagement slots on the one hand and the pivot pins (13) or the bearing shaft on the other hand can be brought into engagement by a sliding movement, wherein several bearing slots (14) are provided one above the other in the lever element (11), so that the lever element (11) can be mounted to the basic element (8) in a height adjustable manner, wherein, in particular, the bearing slots (14) slope downwardly towards their open ends.

4. Attachment device (1) according to any of the preceding claims, **characterized in that** the basic element (8) and the lever element (11) have a U-shaped profile, wherein the U-legs of the basic element (8) and the lever element (11) overlap each other and the pivot bearing assembly is provided in the overlapping regions of the U-legs.

5. Attachment device (1) according to claims 3 and 4, **characterized in that** corresponding pairs of bearing slots (14) are provided one above the other in the U-legs of the lever element (11) and the bearing shaft or the pair of pivot pins (13) is provided on the U-legs of the basic element (8).

6. Attachment device (1) according to any of the preceding claims, **characterized in that** the clamping device (20) is connected to the basic element (8) and lever element (11) between the free front end portion of the lever element (11) and the pivot bearing and/or **in that** clamping devices (20) are provided on both lateral sides of the basic element (8).

7. Attachment device (1) according to any of the preceding claims, **characterized in that** each clamping device (20) is formed as a screw connection comprising a threaded clamping element, in particular a screw (6) or a threaded bolt, which extends through corresponding through holes in the basic element (8) and the lever element (11) and has at least one screw nut (26) fixed thereon.

8. Attachment device (1) according to any of the preceding claims, **characterized in that** the basic element (8) and/or the lever element (11) are made of punched sheet steel.

9. Attachment device (1) according to any of the preceding claims, **characterized in that** a pressure element (15) is arranged at the free end of the lever element (11) and has at its bottom side a pressure face to be brought into contact with a component of a vehicle (4), wherein the pressure face has a wave-shaped profile and/or is made of steel.

10. Attachment device (1) according to any of the preceding claims, **characterized in that** positioning means are provided on the upper face of the basic element (8) for a positioning a height adjustment element (27) or a stack of height adjustment elements (27) can be positioned on the upper side of the basic element (8).

11. A maneuvering drive system comprising a cross member (5), a maneuvering drive unit attached or to be attached to the cross member (5) and at least one attachment device (1) according to any of the preceding claims, wherein the cross member (5) has a rectangular, in particular a square profile and the cross member (5) and the reception space (9) of the basic element (8) are dimensioned in such a manner, that the cross member (5) can be arranged in the reception space (9) to extend therethrough.

12. Maneuvering drive system according to claim 11, **characterized in that** it comprises at least one height adjustment element (27) to be positioned on the upper side of the basic element (8) at the front end thereof, wherein the height adjustment element (27) has a width, which exceeds the width of the basic element (8) in the transverse direction thereof.

13. Maneuvering drive system according to claim 12, **characterized in that** several height adjustment elements (27) are provided, all of which have the same design and are provided with fixing means for attaching the height adjustment elements (27) to each other and one above the other.

14. Maneuvering drive system according to claim 13, **characterized in that** the fixing means include grooves (30) in the upper face of each height adjustment element (27) and corresponding tongues (31) provided at the bottom side of the height adjustment element (27), wherein the tongues (31) of one height adjustment element (27) can be slidingly brought into engagement with the grooves (30) of a different height adjustment element (27), wherein the grooves (30) and tongues (31), in particular extend in a front to rear direction.

15. Maneuvering drive system according to claims 12 to 14, **characterized in that** the upper side of each height adjustment element (27) is provided with a structure, in particular provided with a wave structure and/or **in that** the height adjustment element (27) or each height adjustment element (27) is provided with fixing means for attaching a stop element to the front side of the height adjustment element (27) at a lateral end thereof.

## Patentansprüche

1. Befestigungsvorrichtung (1) zur Befestigung eines Querträgers (5) eines Rangierantriebssystems an einem Fahrzeug (4), insbesondere am Fahrgestell (2) eines Fahrzeugs (4), mit
- einem Basiselement (8), das einen Aufnahmeraum (9) für einen Abschnitt eines Querträgers (5) definiert, wobei sich der Aufnahmeraum (9) in Längsrichtung des Basiselements (8) erstreckt und an seinen gegenüberliegenden Enden offen ist,
- einem Hebelelement (11), das sich oberhalb des Grundelements (8) erstreckt und mittels einer eine Schwenkachse (X) definierenden Schwenklageranordnung schwenkbar an diesem befestigt ist, und
- mindestens einer Klemmvorrichtung (20), mittels der ein freier vorderer Endbereich des Hebelelements (11) um die Schwenkachse (X) zum Grundelement (8) hin schwenkbar ist, um ein Bauteil eines Fahrzeugs (4), insbesondere das Fahrgestell (2) des Fahrzeugs (4) zwischen dem freien vorderen Endabschnitt des Hebelelements (11) einerseits und dem Grundelement (8) und/oder einem sich durch den Aufnahmeraum (9) des Grundelements (8) erstreckenden Querträger (5) andererseits zu klemmen, **dadurch gekennzeichnet, dass** das Hebelelement (11) höhenverstellbar an dem Grundelement (8) gelagert ist.

2. Befestigungsvorrichtung (1) nach Anspruch 1, **dadurch gekennzeichnet, dass** das Hebelelement (11) an seinem hinteren Endbereich höhenverstellbar am Grundelement (8) befestigt ist.

3. Befestigungsvorrichtung (1) nach Anspruch 1 oder 2, **dadurch gekennzeichnet, dass** die Schwenklagerung eine Schwenkachse oder Schwenkzapfen (13) aufweist, die eine Schwenkachse (X) definiert/definieren und am Grundelement (8) vorgesehen ist/sind, und im Hebelelement (11) vorgesehene, nach hinten oder vorne offene Lagerschlitze (14) umfasst, so dass die Eingriffsschlitze einerseits und die Drehzapfen (13) bzw. die Lagerwelle andererseits durch eine Schiebebewegung in Eingriff gebracht werden können, wobei im Hebelelement (11) mehrere Lagerschlitze (14) übereinander vorgesehen sind, so dass das Hebelelement (11) höhenverstellbar am Grundelement (8) montiert werden kann, wobei insbesondere die Lagerschlitze (14) zu ihren offenen Enden hin abfallend sind.

4. Befestigungsvorrichtung (1) nach einem der vorhergehenden Ansprüche, **dadurch gekennzeichnet, dass** das Grundelement (8) und das Hebelelement (11) ein U-förmiges Profil aufweisen, wobei sich die U-Schenkel des Grundelements (8) und des Hebelelements (11) überlappen und die Schwenklageranordnung in den überlappenden Bereichen der U-Schenkel vorgesehen ist.

5. Befestigungsvorrichtung (1) nach den Ansprüchen 3 und 4, **dadurch gekennzeichnet, dass** in den U-Schenkeln des Hebelelements (11) entsprechende Paare von Lagernuten (14) übereinander vorgesehen sind und die Lagerwelle bzw. das Paar von Drehzapfen (13) an den U-Schenkeln des Grundelements (8) vorgesehen ist.

6. Befestigungsvorrichtung (1) nach einem der vorhergehenden Ansprüche, **dadurch gekennzeichnet, dass** die Klemmvorrichtung (20) zwischen dem freien vorderen Endbereich des Hebelelements (11) und dem Schwenklager mit dem Grundelement (8) und dem Hebelelement (11) verbunden ist und/oder **dass** an beiden Seiten des Grundelements (8) Klemmvorrichtungen (20) vorgesehen sind.

7. Befestigungsvorrichtung (1) nach einem der vorhergehenden Ansprüche, **dadurch gekennzeichnet, dass** jede Klemmvorrichtung (20) als Schraubverbindung ausgebildet ist, die ein mit Gewinde versehenes Klemmelement, insbesondere eine Schraube (6) oder einen Gewindebolzen, umfasst, das sich durch entsprechende Durchgangslöcher im Grundelement (8) und im Hebelelement (11) erstreckt und an dem mindestens eine Schraubenmutter (26) befestigt ist.

8. Befestigungsvorrichtung (1) nach einem der vorhergehenden Ansprüche, **dadurch gekennzeichnet, dass** das Grundelement (8) und/oder das Hebelelement (11) aus gestanztem Stahlblech hergestellt sind.

9. Befestigungsvorrichtung (1) nach einem der vorhergehenden Ansprüche, **dadurch gekennzeichnet, dass** am freien Ende des Hebelelements (11) ein Druckelement (15) angeordnet ist, das an seiner Unterseite eine mit einem Bauteil eines Fahrzeugs (4) in Kontakt zu bringende Druckfläche aufweist, wobei die Druckfläche ein wellenförmiges Profil aufweist und/oder aus Stahl gefertigt ist.

10. Befestigungsvorrichtung (1) nach einem der vorhergehenden Ansprüche, **dadurch gekennzeichnet, dass** an der Oberseite des Grundelements (8) Positioniermittel für eine Positionierung eines Höhenverstellelements (27) vorgesehen sind oder ein Stapel von Höhenverstellelementen (27) an der Oberseite des Grundelements (8) positioniert werden kann.

11. Rangierantriebssystem mit einem Querträger (5), einer am Querträger (5) befestigten oder zu befestigenden Rangierantriebseinheit und mindestens einer Befestigungsvorrichtung (1) nach einem der vorhergehenden Ansprüche, wobei der Querträger (5) ein rechteckiges, insbesondere quadratisches Profil aufweist und der Querträger (5) und der Aufnahmeraum (9) des Grundelements (8) so dimensioniert sind, dass der Querträger (5) im Aufnahmeraum (9) sich durch diesen erstreckend angeordnet werden kann.

12. Rangierantriebssystem nach Anspruch 11, **dadurch gekennzeichnet, dass** es mindestens ein an der Oberseite des Grundelements (8) und an dessen vorderem Ende zu positionierendes Höhenverstellelement (27) umfasst, wobei das Höhenverstellelement (27) eine Breite aufweist, die die Breite des Grundelements (8) in dessen Querrichtung übersteigt.

13. Rangierantriebssystem nach Anspruch 12, **dadurch gekennzeichnet, dass** mehrere Höhenverstellelemente (27) vorgesehen sind, die alle gleich ausgebildet sind und mit Befestigungsmitteln zum Befestigen der Höhenverstellelemente (27) untereinander und übereinander versehen sind.

14. Rangierantriebssystem nach Anspruch 13, **dadurch gekennzeichnet, dass** die Befestigungsmittel Nuten (30) in der Oberseite jedes Höheneinstellelements (27) und entsprechende Federn (31) umfassen, die an der Unterseite des Höheneinstellelements (27) vorgesehen sind, wobei die Federn (31) eines Höheneinstellelements (27) gleitend in Eingriff mit den Nuten (30) eines anderen Höheneinstellelements (27) gebracht werden können, wobei sich die Nuten (30) und Federn (31) insbesondere in einer Richtung von vorne nach hinten erstrecken.

15. Rangierantriebssystem nach einem der Ansprüche 12 bis 14, **dadurch gekennzeichnet, dass** die Oberseite jedes Höhenverstellelements (27) mit einer Struktur, insbesondere mit einer Wellenstruktur, versehen ist und/oder dass das Höhenverstellelement (27) oder jedes Höhenverstellelement (27) mit Befestigungsmitteln zum Anbringen eines Anschlagelements an der Vorderseite des Höhenverstellelements (27) an einem seitlichen Ende desselben versehen ist.

## Revendications

1. Dispositif de fixation (1) d'une traverse (5) d'un système d'entraînement de manoeuvre à un véhicule (4), en particulier au châssis (2) d'un véhicule (4), comprenant
- un élément de base (8) qui définit un espace de réception (9) pour une section d'une traverse (5), ou l'espace de réception (9) s'étend dans la direction longitudinale de l'élément de base (8) et est ouvert à ses extrémités opposées,
- un élément de levier (11), qui s'étend au-dessus de l'élément de base (8) et y est fixé de manière pivotante au moyen d'un ensemble de paliers de pivotement définissant un axe de pivotement (X), et
- au moins un dispositif de serrage (20) au moyen duquel une partie frontale libre de l'élément de levier (11) peut être pivotée autour de l'axe de pivotement (X) vers l'élément de base (8) afin de serrer un composant d'un véhicule (4), en particulier le châssis (2) du véhicule (4), entre la partie avant libre de l'élément de levier (11) d'une part et l'élément de base (8) et/ou une traverse (5) qui s'étend à travers l'espace de réception (9) de l'élément de base (8) d'autre part, **caractérisé en ce que** l'élément de levier (11) est monté sur l'élément de base (8) d'une manière réglable en hauteur.

2. Dispositif de fixation (1) selon la revendication 1, **caractérisé en ce que** l'élément de levier (11) est fixé à l'élément de base (8) d'une manière réglable en hauteur au niveau de sa partie terminale arrière.

3. Dispositif de fixation (1) selon la revendication 1 ou 2, **caractérisé en ce que** l'ensemble de paliers de pivotement comprend un arbre de pivotement ou des axes de pivotement (13) définissant l'axe de pivotement (X) et prévus sur l'élément de base (8), et des fentes de palier (14) qui sont prévues dans l'élément de levier (11) et sont ouvertes vers l'arrière ou vers l'avant, afin que les fentes d'engagement d'une part et les axes de pivotement (13) ou l'arbre de roulement d'autre part puissent être mis en contact par un mouvement de glissement, plusieurs fentes de roulement (14) étant prévues l'une au-dessus de l'autre dans l'élément de levier (11), afin que l'élément de levier (11) puisse être monté sur l'élément de base (8) de manière réglable en hauteur, les fentes de roulement (14) étant en particulier inclinées vers le bas en direction de leurs extrémités ouvertes.

4. Dispositif de fixation (1) selon l'une quelconque des revendications précédentes, **caractérisé en ce que** l'élément de base (8) et l'élément de levier (11) ont un profil en forme de U, dans lequel les pattes en U de l'élément de base (8) et de l'élément de levier (11) se chevauchent l'une l'autre et l'ensemble de palier de pivot est fourni dans les régions de chevauchement des pattes en U.

5. Dispositif de fixation (1) selon les revendications 3 et 4, **caractérisé par le fait que des** paires correspondantes de fentes de roulement (14) sont prévues l'une au-dessus de l'autre dans les pattes en U de l'élément de levier (11) et que l'arbre de roulement ou la paire de pivots (13) est prévu sur les pattes en U de l'élément de base (8).

6. Dispositif de fixation (1) selon l'une quelconque des revendications précédentes, **caractérisé en ce que** le dispositif de serrage (20) est relié à l'élément de base (8) et à l'élément de levier (11) entre la partie avant libre de l'élément de levier (11) et le palier de pivotement et/ou **en ce que les** dispositifs de serrage (20) sont prévus sur les deux côtés latéraux de l'élément de base (8).

7. Dispositif de fixation (1) selon l'une quelconque des revendications précédentes, **caractérisé en ce que** chaque dispositif de serrage (20) est constitué d'un raccord à vis comprenant un élément de serrage fileté, en particulier une vis (6) ou un boulon fileté, qui s'étend à travers des trous de passage correspondants dans l'élément de base (8) et l'élément de levier (11) et sur lequel est fixé au moins un écrou à vis (26).

8. Dispositif de fixation (1) selon l'une quelconque des revendications précédentes, **caractérisé par le fait que** l'élément de base (8) et/ou l'élément de levier (11) sont en tôle d'acier découpée.

9. Dispositif de fixation (1) selon l'une quelconque des revendications précédentes, **caractérisé en ce qu'**un élément de pression (15) est disposé à l'extrémité libre de l'élément de levier (11) et présente sur sa face inférieure une face de pression destinée à être mise en contact avec un composant d'un véhicule (4), la face de pression ayant un profil en forme de vague et/ou étant fabriquée en acier.

10. Dispositif de fixation (1) selon l'une quelconque des revendications précédentes, **caractérisé en ce que** des moyens de positionnement sont prévus sur la face supérieure de l'élément de base (8) pour positionner un élément de réglage en hauteur (27) ou une pile d'éléments de réglage en hauteur (27) sur la face supérieure de l'élément de base (8).

11. Système d'entraînement de manoeuvre comprenant une traverse (5), une unité d'entraînement de manoeuvre fixée ou devant être fixée à la traverse (5) et au moins un dispositif de fixation (1) selon l'une quelconque des revendications précédentes, dans lequel la traverse (5) a un profil rectangulaire, en particulier carré, et la traverse (5) et l'espace de réception (9) de l'élément de base (8) sont dimensionnés de telle sorte que la traverse (5) peut être disposée dans l'espace de réception (9) pour s'étendre à travers celui-ci.

12. Système d'entraînement de manoeuvre selon la revendication 11, **caractérisé en ce qu'**il comprend au moins un élément de réglage de la hauteur (27) à positionner sur le côté supérieur de l'élément de base (8) à son extrémité avant, l'élément de réglage de la hauteur (27) ayant une largeur qui dépasse la largeur de l'élément de base (8) dans la direction transversale de celui-ci.

13. Système d'entraînement de manoeuvre selon la revendication 12, **caractérisé en ce que** plusieurs éléments de réglage de la hauteur (27) sont prévus, qui ont tous la même conception et sont pourvus de moyens de fixation pour attacher les éléments de réglage de la hauteur (27) l'un à l'autre et l'un au-dessus de l'autre.

14. Système d'entraînement de manoeuvre selon la revendication 13, **caractérisé en ce que** les moyens de fixation comprennent des rainures (30) sur la face supérieure de chaque élément de réglage de la hauteur (27) et des languettes correspondantes (31) prévues sur la face inférieure de l'élément de réglage de la hauteur (27), les languettes (31) d'un élément de réglage de la hauteur (27) pouvant être engagées de manière coulissante dans les rainures (30) d'un autre élément de réglage de la hauteur (27), les rainures (30) et les languettes (31) s'étendant en particulier dans une direction avant-arrière.

15. Système d'entraînement de manoeuvre selon les revendications 12 à 14, **caractérisé par le fait que la** face supérieure de chaque élément de réglage de la hauteur (27) est pourvue d'une structure, en particulier d'une structure ondulée et/ou **par le fait que** l'élément de réglage de la hauteur (27) ou chaque élément de réglage de la hauteur (27) est pourvu d'un moyen de fixation pour attacher un élément de butée à la face avant de l'élément de réglage de la hauteur (27) à une extrémité latérale de ce dernier.
